# EUROPÄISCHE PATENTANMELDUNG

(11) **EP 2 799 264 A1**
(43) Veröffentlichungstag der Anmeldung: **05.11.2014**
(21) Anmeldenummer: 13165755.3
(22) Anmeldetag: 29.04.2013
(51) Int. Cl.: B60H 1/00, B60H 1/32, B60P 3/20, F24F 11/02, F25D 29/00, B65D 88/74, G05D 23/19

(54) **Nutzfahrzeug für den Transport von temperaturgeführtem Transportgut und Verfahren zum Betrieb einer bei einem solchen Nutzfahrzeug vorgesehenen Kältemaschine**

(71) Anmelder: Schmitz Cargobull AG, 48341 Altenberge (DE)
(72) Erfinder: Flacke, Norbert, 45894 Gelsenkirchen (DE); Schanzmann, Martin, 46395 Bocholt (DE)
(74) Vertreter: Cohausz & Florack

(57) **Zusammenfassung**

Die Erfindung betrifft ein Nutzfahrzeug für den Transport von temperaturgeführtem Transportgut. Das Nutzfahrzeug weist dabei einen Aufbau (8), der einen das Transportgut aufnehmenden Laderaum (16) umgibt, eine Kältemaschine (17), die temperierte Luft in den Laderaum (16) abgibt und eine Steuereinrichtung (19) umfasst, die die Kältemaschine (17) steuert, und eine zentrale Datenverarbeitungseinrichtung (21) auf, die Betriebsparameter des Nutzfahrzeugs (2) erfasst, verarbeitet oder abspeichert. In dem erfindungsgemäß die Steuereinrichtung (19) der Kältemaschine (17) mit der Datenverarbeitungseinrichtung (21) des Nutzfahrzeugs (2) über eine Datenverbindung (30) zur Übertragung von Daten verbunden ist, und die Steuereinrichtung (19) die Kältemaschine (17) in Abhängigkeit von Daten steuert, die die Datenverarbeitungseinrichtung (21) der Steuereinrichtung (19) über die Datenverbindung (30) zur Verfügung stellt, wird auf einfache Weise eine optimierte Steuerung der Kältemaschine erreicht.

## Beschreibung

Die Erfindung betrifft ein Nutzfahrzeug für den Transport von temperaturgeführtem Transportgut, das einen Aufbau, der einen das Transportgut aufnehmenden Laderaum umgibt, eine Kältemaschine, die temperierte Luft in den Laderaum abgibt und eine Steuereinrichtung umfasst, die die Kältemaschine steuert, und eine zentrale Datenverarbeitungseinrichtung aufweist, die Betriebsparameter des Nutzfahrzeugs erfasst, verarbeitet oder speichert. Darüber hinaus betrifft die Erfindung ein Verfahren zum Betrieb einer an einem solchen Nutzfahrzeug vorgesehenen Kältemaschine.

Typischerweise handelt es sich bei Nutzfahrzeugen der hier in Rede stehenden Art um Auflieger für einen Sattelzug, um LKW-Anhänger oder mit einem festen Aufbau ausgestattete Lastkraftwagen. Die bei solchen Nutzfahrzeugen vorgesehenen Aufbauten sind in der Regel nach Art eines Koffers quaderförmig ausgebildet und umgrenzen mit ihren festen Wänden den Laderaum, der das zu transportierende Gut aufnimmt. Die Beladung des Laderaums erfolgt dabei üblicherweise über Türen, die am Heck oder in den Längsseitenwänden des Aufbaus vorgesehen sind.

Solche Nutzfahrzeuge werden zum Transport von Gütern eingesetzt, die bei einer bestimmten Temperatur gehalten werden sollen. Um die jeweils geforderte Temperatur im Laderaum aufrechtzuerhalten, ist üblicherweise mindestens eine Kältemaschine am Nutzfahrzeug angebracht.

Diese Kältemaschine ist in der Regel an der Stirnwand, auf dem Dach oder unter dem Boden des jeweiligen Nutzfahrzeugaufbaus montiert und versorgt den Laderaum mit temperierter Luft. Die Luft wird in der Praxis im Umlauf von der Kältemaschine aus dem Laderaum abgezogen und nach der Temperierung zurück in den Laderaum geblasen. Es ist jedoch auch denkbar, die zu temperierende Luft aus der Umgebung anzusaugen, in der Kältemaschine zu temperieren und dann in den Laderaum zu leiten.

Die von der Kältemaschine bewirkte "Temperierung" der Luft hat zum Ziel, die das Transportgut im Laderaum umgebende Atmosphäre auf einer bestimmten vorgeschriebenen Temperatur zu halten. In der Praxis wird die im Laderaum enthaltene Atmosphäre in den meisten Anwendungsfällen von der Kältemaschine auf eine gegenüber der Umgebungstemperatur niedrigere Temperatur abgekühlt werden, wie sie typischerweise erforderlich ist, um beispielsweise Lebensmittel über längere Zeit frisch zu halten. Jedoch ist es genauso möglich, mit Kältemaschinen der hier in Rede stehenden Art die im Laderaum enthaltene Atmosphäre zu erwärmen. Dies kann beispielsweise zweckmäßig sein, wenn das Transportgut frostempfindlich ist und die Umgebungstemperatur beispielsweise im Winter so niedrig ist, dass eine damit einhergehende zu starke Abkühlung der Laderaumatmosphäre das Transportgut schädigen würde.

"Temperaturgeführtes Transportgut" heißt hier somit, dass das Transportgut im Laderaum unabhängig von der Umgebungstemperatur bei einer vorgeschriebenen Temperatur gehalten wird. Dies schließt nicht nur die Möglichkeit ein, die Temperatur des Transportguts während des Transports konstant zu halten, sondern es ist ebenso möglich, die Temperatur des Transportguts gezielt so zu steuern, dass das Transportgut während des Transports seinen Zustand ändert.

Im Übrigen muss die im Laderaum vorhandene Atmosphäre nicht notwendig aus Luft bestehen. Vielmehr ist es auch denkbar, anstelle von Luft eine anders zusammengesetzte gasförmige Atmosphäre vorzusehen, die im Kreislauf durch die Kältemaschine gefördert wird. Sofern hier von "Luft" die Rede ist, gelten die diesbezüglichen Erläuterungen somit selbstverständlich auch für andere gasförmige Medien, die geeignet sind, in einem Laderaum eine Atmosphäre zu bilden, in der das jeweilige Transportgut bei einer bestimmten Temperatur gehalten wird.

Autarke Kältemaschinen, welche unabhängig von der Antriebsleistung des Nutzfahrzeugs betrieben werden, sind in der Regel mit einem Verbrennungsmotor ausgestattet, der über einen eigenen Tank mit Brennstoff versorgt wird. Der Verbrennungsmotor treibt dann entweder über eine direkte mechanische Verkopplung oder unter Zwischenschaltung eines vom Verbrennungsmotor angetriebenen elektrischen Generators und eines vom Generator angetriebenen elektrischen Antriebs einen in der Kältemaschine vorgesehenen Kompressor an. Dieser verdichtet ein Kältemittel, über das in einem mit dem Kompressor in einem Kältemittelkreislauf verbundenen Verdampfer dem Luftstrom Wärme entzogen wird, der den Verdampfer durchströmt. Üblicherweise wird dazu der Verbrennungsmotor in einem stationären Betrieb betrieben, bei dem er bei maximaler Nutzung der durch den Brennstoff bereitgestellten chemischen Energie und damit einhergehend minimiertem Verbrauch eine optimierte Antriebsleistung liefert. Um während längerer Wartezeiten Treibstoff zu sparen, können moderne Kältemaschinen über einen geeigneten Anschluss auch direkt mit elektrischer Energie versorgt werden. Dies kann beispielsweise dann zweckmäßig sein, wenn das Nutzfahrzeug über eine längere Wartezeit geparkt wird und am jeweiligen Parkplatz ein Elektroanschluss für die Versorgung der Kältemaschine zur Verfügung steht. Der im Fahrbetrieb zum Antrieb der Kältemaschine eingesetzte Verbrennungsmotor kann dann abgeschaltet werden, ohne dass es zu einer Unterbrechung der Temperierung der im Laderaum enthaltenen Atmosphäre kommt.

Die in der Praxis eingesetzten Kältemaschinen basieren auf dem Grundprinzip, dass sie eine vom Nutzfahrzeug separierte, autarke Funktionseinheit bilden, die über ein eigenes Sensorsystem und eine eigene Steuerung verfügen, die unabhängig von allen am Nutzfahrzeug selber vorgesehenen Systemen betrieben werden. Hintergrund dieses Grundsatzes ist, dass Einflüsse, die vom Nutzfahrzeug ausgehen könnten, den Betrieb der Kältemaschine nicht beeinträchtigen sollen. So umfasst die zum Steuern der von ihnen ausgebrachten Leistung bei in der Praxis eingesetzten Kältemaschinen üblicherweise vorgesehene Steuereinrichtung einen eigenen im Laderaum des Nutzfahrzeugs angeordneten Sensor, der die dort gegebene Temperatur erfasst. Auf Basis dieser Temperaturmessung wird die Leistung der Kältemaschine so gesteuert, dass die vom Sensor erfasste Temperatur einem Sollwert entspricht.

Um beim Transport von temperaturgeführtem Gut, wie beispielsweise Bananen, sicherzustellen, dass auch in vom Temperatursensor der Kältemaschine entfernten Zonen des Laderaums die erforderliche Temperatur eingehalten wird, können an den Transportbehältern, in denen das betreffende Gut gelagert ist, weitere Temperatursensoren befestigt werden, die über eine Funkverbindung Temperaturmessergebnisse an die Steuereinrichtung der Kältemaschine senden. Die separaten, an den jeweiligen Transportbehältern angeordneten Temperaturmesssensoren kommunizieren dabei ebenfalls ausschließlich mit der Steuereinrichtung der Kältemaschine, um auch insoweit die Selbstständigkeit der Kältemaschine nicht einzuschränken.

Unabhängig von der Kältemaschine sind moderne Nutzfahrzeuge üblicherweise mit einer Datenverarbeitungseinrichtung ausgestattet, die alle Betriebsparameter erfasst, welche für die Beurteilung des jeweiligen Betriebszustands des Fahrzeugs benötigt werden. Wie beispielsweise in der DE 100 18 942 B4 anhand des Beispiels einer telemetrischen Ermittlung der sich bei einem Lastkraftwagen ergebenden Gewichtsstrecke erläutert, kann eine laufende Überwachung des Betriebszustands des Nutzfahrzeugs an einer zentralen Stelle dadurch ermöglicht werden, dass die vom Nutzfahrzeug mitgeführte Datenverarbeitungseinrichtung die von ihr erfassten Daten an einen Zentralcomputer sendet, von dem dann anhand der übertragenen, die jeweils absolvierte Fahrstrecke und das jeweils transportierte Gewicht repräsentierenden Daten die so genannte "Gewichtsstrecke" als Produkt aus zurückgelegter Strecke und jeweils transportierter Last gebildet wird. Eine detaillierte Erläuterung der Funktionen einer in der Praxis für die Überwachung von Sattelaufliegern und anderen Anhängern für Lastkraftwagen eingesetzten Datenverarbeitungseinrichtung findet sich in der von der Cargobull Telematics GmbH herausgegebenen Broschüre "TrailerConnect® - Technik und Informationen", Stand August 2012.

Vor dem Hintergrund des voranstehend erläuterten Standes der Technik bestand die Aufgabe der Erfindung darin, ein Nutzfahrzeug zu schaffen, bei dem mit einfachen Mitteln die Steuerung der Kältemaschine optimiert ist. Ebenso sollte mit gleichfalls einfachen Mitteln ein Verfahren zum Betrieb einer an einem Nutzfahrzeug vorgesehenen Kältemaschine angegeben werden, das eine optimierte Steuerung der Kältemaschine erlaubt.

In Bezug auf das Nutzfahrzeug besteht die erfindungsgemäße Lösung dieser Aufgabe darin, dass ein Nutzfahrzeug mindestens die in Anspruch 1 angegebenen Merkmale aufweist.

In Bezug auf das Verfahren ist die voranstehend genannte Aufgabe erfindungsgemäß dadurch gelöst worden, dass bei der Steuerung einer an einem Nutzfahrzeug eingesetzten Kältemaschine die in Anspruch 5 angegebenen Arbeitsschritte durchlaufen werden.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Nutzfahrzeug für den Transport von temperaturgeführtem Transportgut ist dementsprechend in Übereinstimmung mit dem eingangs erläuterten Stand der Technik mit einem Aufbau, der einen das Transportgut aufnehmenden Laderaum umgibt, mit einer Kältemaschine, die temperierte Luft in den Laderaum abgibt und eine Steuereinrichtung umfasst, die die Kältemaschine steuert, und mit einer zentralen Datenverarbeitungseinrichtung ausgestattet, die Betriebsparameter des Nutzfahrzeugs erfasst, verarbeitet oder speichert.

Erfindungsgemäß ist nun die Steuereinrichtung der Kältemaschine mit der Datenverarbeitungseinrichtung des Nutzfahrzeugs über eine Datenverbindung zur Übertragung von Daten verbunden. Dabei steuert die Steuereinrichtung die Kältemaschine in Abhängigkeit von Daten, die die Datenverarbeitungseinrichtung der Steuereinrichtung über die Datenverbindung zur Verfügung stellt.

Bei einem erfindungsgemäßen Nutzfahrzeug sind somit die bisher stets getrennten Systeme "Steuerung der Kältemaschine" und "Datenverarbeitungseinrichtung des Nutzfahrzeugs" datentechnisch derart miteinander verknüpft, dass die Steuerung der Kältemaschine von der Datenverarbeitungseinrichtung Daten erhält, die zur Grundlage der Steuerung der Kältemaschine gemacht werden. Auf diese Weise kann bei der Steuerung der Kältemaschine eine Vielzahl von Zusatzinformationen genutzt werden, ohne dass dazu gesonderte Sensoren oder andere zusätzliche Erfassungsgeräte im Nutzfahrzeug vorgesehen werden müssten. Stattdessen erlaubt es die Erfindung, die am Nutzfahrzeug zum Zwecke der Überwachung des jeweiligen Betriebszustands bereits vorhandenen Messeinrichtungen für die Steuerung der Kältemaschine zu nutzen. Die erfindungsgemäße Ankopplung der Steuereinrichtung der Kältemaschine an die Datenverarbeitungseinrichtung des Nutzfahrzeugs ermöglicht auf diese Weise mit denkbar einfachen Mitteln eine auf den jeweiligen Betriebszustand des Nutzfahrzeugs abgestellte Steuerung der Kältemaschine, die im Ergebnis zu einer optimierten Einhaltung der jeweils vorgegebenen Laderaumtemperaturen bei verbesserter Ausnutzung der jeweils zur Verfügung stehenden Energie und gleichzeitiger Minimierung von Schadstoff- und Lärmemissionen führen.

Den Merkmalen eines erfindungsgemäßen Nutzfahrzeugs entsprechend sieht das erfindungsgemäße Verfahren zum Betrieb einer Kältemaschine, die an einem Nutzfahrzeug für den Transport von temperaturgeführtem Transportgut vorgesehen ist, das einen Aufbau, der einen das Transportgut aufnehmenden Laderaum umgibt, die Kältemaschine, die temperierte Luft in den Laderaum abgibt und eine Steuereinrichtung umfasst, die die Kältemaschine steuert, und eine zentrale Datenverarbeitungseinrichtung umfasst, die Betriebsparameter des Nutzfahrzeugs erfasst, verarbeitet oder speichert, erfindungsgemäß vor, dass die Kältemaschine in Abhängigkeit von Daten gesteuert wird, die der Steuereinrichtung der Kältemaschine von der Datenverarbeitungseinrichtung über eine Datenverbindung zur Verfügung gestellt werden.

Die Ankopplung der Steuerung der Kältemaschine an die Datenverarbeitung kann auf beliebige Weise erfolgen, solange sichergestellt ist, dass die zum Betrieb der Kältemaschine benötigten Daten zwischen der Datenverarbeitungseinrichtung und der Steuereinrichtung ausgetauscht werden können. Eine vorrichtungsmäßig auf einfache Weise zu realisierende Ausgestaltung der Erfindung besteht in dieser Hinsicht darin, dass die Datenverarbeitungseinrichtung eine Rechnereinheit, eine Speichereinheit und eine Schnittstelle umfasst, an der die von der Datenverarbeitungseinrichtung erfassten Betriebsparameter auslesbar sind, wobei die Schnittstelle optimalerweise dazu genutzt wird, die Steuereinrichtung der Kältemaschine zur Herstellung der Datenverbindung an die Schnittstelle der Datenverarbeitungseinrichtung anzuschließen.

Allgemein gesagt stellt die Datenverarbeitungseinrichtung gemäß der Erfindung Daten über eine geeignete Schnittstelle zur Verfügung, an die die Steuereinrichtung der Kältemaschine ankoppelbar ist und über die von der Datenverarbeitungseinrichtung erfasste Betriebsparameter und optional zusätzlich empfangene Daten auslesbar sind. Dies hat nicht nur den Vorteil, dass zum Ankoppeln der Datenverarbeitungseinrichtung an die Steuereinrichtung eine bereits üblicherweise bei Nutzfahrzeugen, die mit Datenverarbeitungseinrichtungen der hier in Rede stehenden Art ausgestattet sind, vorhandene Schnittstelle genutzt wird. Vielmehr besteht ein wichtiger Vorteil dieser Ausgestaltung darin, dass sich die Kältemaschine beispielsweise für Wartungs- oder Reparaturzwecke vollständig von den Nutzfahrzeugen trennen lässt, ohne dass dazu Eingriffe in die Verkabelung der Nutzfahrzeuge erfolgen müssen. In der Praxis kann die Ankopplung an der Schnittstelle durch eine Stecker-Buchsen-Kombination gebildet sein, die durch einfache Handgriffe hergestellt und wieder gelöst werden kann.

Insbesondere die Nachrüstung bestehender Nutzfahrzeuge kann dadurch vereinfacht werden, dass die Datenverarbeitungseinrichtung die von ihr jeweils zur Verfügung gestellten Daten drahtlos an die Steuereinrichtung der Kältemaschine überträgt.

Grundsätzlich kann es sich bei den Daten, die von der Datenverarbeitungseinrichtung an die Steuereinrichtung der Kältemaschine geliefert werden, um in der Datenverarbeitungseinrichtung hinterlegte Informationen oder um Daten handeln, die von einer zentralen Stelle über eine Funkverbindung an die Datenverarbeitungseinrichtung gesendet werden. Die von der Datenverarbeitungseinrichtung erfassten, per Datenfernübertragung drahtlos an eine Steuerzentrale übermittelten Betriebsparameter oder Daten können in der Steuerzentrale zur Ermittlung von Steuersignalen für die Kältemaschine genutzt werden. Die betreffenden Steuersignale werden dann wiederum von der Steuerzentrale als Steuerbefehle an die Datenverarbeitungseinrichtung gesendet und von dieser entweder direkt der Steuerung der Kältemaschine zur Verfügung gestellt oder zur Grundlage der von der Datenverarbeitungseinrichtung ermittelten und dann an die Steuereinrichtung der Kältemaschine gelieferten Steuerinformationen gemacht.

Bei den von der Datenverarbeitungseinrichtung an die Steuereinrichtung der Kältemaschine gelieferten "Daten" handelt es sich somit im Sinne der Erfindung um jede Information, die geeignet ist, die Steuerung der Kältemaschine direkt oder indirekt zu beeinflussen, indem die betreffenden Daten entweder als von ihr direkt umzusetzende Steuersignale an die Steuereinrichtung gesendet werden oder als Informationen, anhand derer die Steuereinrichtung dann selbst die erforderliche Verstellung vornimmt, um die Leistung an die sich aus den erhaltenen Daten jeweils ergebenden Erfordernisse anzupassen.

Ein optimaler Bezug auf die tatsächlich gegebenen Betriebsbedingungen, unter denen das Nutzfahrzeug jeweils betrieben wird bzw. denen das Nutzfahrzeug jeweils ausgesetzt ist, ergibt sich dann, wenn die Daten, die die Datenverarbeitungseinrichtung der Steuereinrichtung zur Verfügung stellt, von der Datenverarbeitungseinrichtung auf Grundlage der Betriebsparameter ermittelt werden, die die Datenverarbeitungseinrichtung erfasst. Bei diesen Betriebsparametern, auf deren Grundlage die Datenverarbeitungseinrichtung die der Steuereinrichtung der Kältemaschine zur Verfügung gestellten Daten ermittelt, kann es sich beispielsweise um einen innerhalb des Laderaums erfassten Temperaturmesswert, einen innerhalb des Laderaums erfassten Feuchtemesswert, einen Füllstandsmesswert, der den Füllstand eines Vorrats für einen zum Betrieb der Kältemaschine benötigten Treibstoff angibt, eine Information über die absolute oder auf den jeweiligen Einsatz bezogene Laufleistung des Nutzfahrzeugs, eine Information über die jeweils beim jeweils aktuellen Einsatz oder über alle Einsätze transportierte Last, eine Information über die jeweils aktuelle oder gemittelte Geschwindigkeit, mit der das Fahrzeug im Betrieb unterwegs ist, oder eine Information über einen Fehler an dem Nutzfahrzeug handeln. Selbstverständlich lassen sich auch verschiedene dieser Betriebsparameter miteinander kombiniert in die Ermittlung der jeweils der Steuereinrichtung zur Verfügung gestellten Daten einbeziehen.

Als eine besonders praxisgerechte Ausgestaltung der Erfindung hat es sich in dieser Hinsicht erwiesen, wenn die von der Datenverarbeitungseinrichtung erfassten und zur Grundlage der der Steuereinrichtung zur Verfügung gestellten Daten gemachten Betriebsparameter die Ergebnisse von Temperaturmessungen sind, die in mindestens zwei Zonen des Laderaums erfasst werden. Auf diese Weise lässt sich der Temperaturgradient über die gesamte Länge des Laderaums des Nutzfahrzeugs erfassen. Beispielsweise können dazu bis zu vier Temperatursensoren an definierter Stelle im Aufbau des Nutzfahrzeugs angebracht werden. Diese Sensoren liefern die in der ihnen jeweils zugeordneten Zone des Laderaums herrschenden Temperaturen an die Datenverarbeitungseinrichtung. Diese stellt die betreffenden Daten entweder in unaufbereiteter Form zur Weiterverarbeitung oder als unmittelbares Steuersignal der Steuereinrichtung der Kältemaschine zur Verfügung. Ergeben die Messergebnisse eine zu große Abweichung der Messergebnisse voneinander von entsprechend zugeordneten Sollwerten, so wird von der Steuereinrichtung die Leistung der Kältemaschine entsprechend nachgeregelt. Zur Angleichung der Temperatur in den einzelnen Laderaumzonen kann zusätzlich oder alternativ ein Lüfter gestartet werden, der für eine intensive Luftumwälzung im Laderaum und damit einhergehend für eine Vergleichmäßigung der Temperaturen innerhalb der überwachten Zonen des Laderaums führt.

Signalisiert dagegen die Datenverarbeitungseinrichtung auf Grundlage der bei ihr vorliegenden Information über die Achslast oder desgleichen, dass das Nutzfahrzeug leer oder nur teilbeladen ist, kann die Leistung der Kältemaschine automatisch entsprechend angepasst werden. Auch ist es möglich, in Phasen, in denen die Kältemaschine abgeschaltet oder nur mit sehr geringer Leistung betrieben wird, der Lüfter von der Steuereinrichtung der Kältemaschine selbsttätig wieder eingeschaltet werden, um eine lokal begrenzt übermäßig ansteigende Temperatur zu vermeiden. Auch kann dadurch, dass die Datenverarbeitungseinrichtung der Steuereinrichtung der Kältemaschine meldet, ob eine Tür zum Laderaum geöffnet ist, die Kältemaschine automatisch auf einen Betriebszustand gesetzt werden, bei dem nur minimale Leistungen erbracht werden. Auf diese Weise können Energieverluste vermieden werden, die bei stets unter einer bestimmten Vorgabe betriebenen Kältemaschinen unvermeidbar eintreten, wenn der zu temperierende Laderaum geöffnet wird. Nach dem Schließen der Tür kann die Kältemaschine dann selbsttätig wieder starten.

Ein für die Praxis ebenfalls wichtiger Vorteil der Erfindung ergibt sich dann, wenn von der Steuereinrichtung Daten an die Datenverarbeitungseinrichtung übertragen werden, die von der Datenverarbeitungseinrichtung erfasst, verarbeitet und abgespeichert werden. Die Datenverarbeitungseinrichtung nimmt in diesem Fall nicht nur die Betriebsparameter des Nutzfahrzeugs selbst, sondern auch die Betriebszustände der Kältemaschine auf. Dies kann dann besonders zweckmäßig sein, wenn die Datenverarbeitungseinrichtung über eine Funkverbindung oder desgleichen mit einem zentralen Rechner verbunden ist, der den Betriebszustand des Nutzfahrzeugs und seiner Aggregate laufend überwacht.

In Fällen, in denen der Laderaum in zwei oder mehr Zonen unterteilt ist, ist in der Praxis zusätzlich zu der Kältemaschine der voranstehend erläuterten Art häufig mindestens eine weitere Temperiereinrichtung vorgesehen, wobei die Kältemaschine einer ersten Zone und die mindestens eine zusätzliche Temperiereinrichtung einer zweiten Zone des Laderaums zugeordnet ist. Bei der jeweils zusätzlich vorgesehenen Temperiereinrichtung kann es sich wiederum um eine eigenständige Kältemaschine handeln. Alternativ ist es jedoch auch möglich, die Temperiereinrichtung als zusätzliche Verdampfer-Wärmetauscherkombination auszubilden, die beispielsweise über einen separaten Kältemittelkreislauf von der Kältemaschine versorgt wird. Erfindungsgemäß lässt sich auch bei einer solchen Ausgestaltung sowohl die Kältemaschine als auch die jeweils zusätzlich vorgesehene Temperiereinrichtung in erfindungsgemäßer Weise dadurch koordiniert steuern, dass sowohl die Kältemaschine als auch die jeweils zusätzliche Temperiereinrichtung in Abhängigkeit von den von der Datenverarbeitungseinrichtung zur Verfügung gestellten Betriebsparametern gesteuert werden.

Nachfolgend wird die Erfindung anhand von Ausführungsbeispielen näher erläutert. Es zeigen jeweils schematisch:

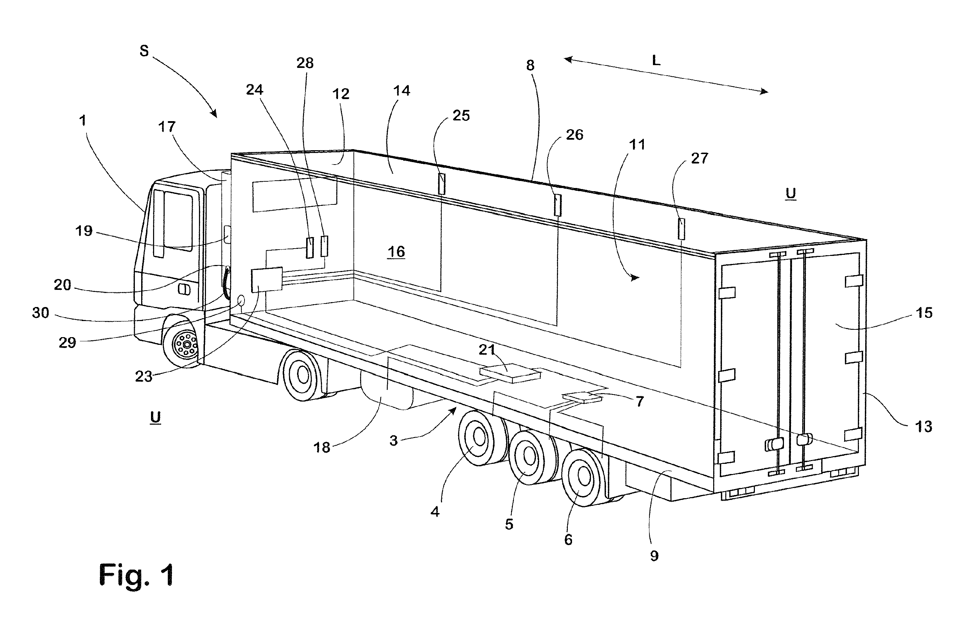

- Fig. 1: einen Sattelzug in einer perspektivischen Ansicht von hinten;

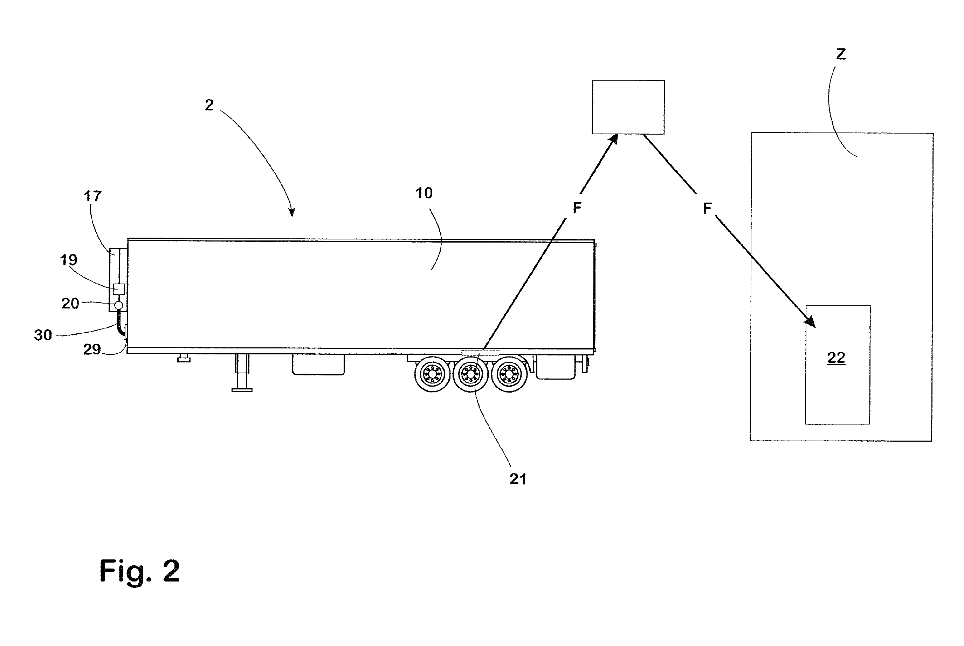

- Fig. 2: den Sattelzug gemäß Fig. 1 in einer seitlichen Ansicht.

Der Sattelzug S besteht aus einer Zugmaschine 1 und einem Sattelauflieger 2, in der Fachsprache auch "Trailer" genannt, bei dem es sich um ein Beispiel für ein Nutzfahrzeug im Sinne der hier beschriebenen Erfindung handelt.

Der Sattelauflieger 2 umfasst ein Chassis 3, an dem in konventioneller Weise drei Achsen 4,5,6 mit jeweils einem Räderpaar mittels einer hier im Einzelnen nicht gezeigten, ebenfalls an sich bereits bekannten Luftfederung gelagert sind. Ein Beispiel für ein solches luftgefedertes Achssystem ist in der DE 199 46 802 C2 beschrieben.

Jedem der Räder der Achsen 4,5,6 ist zudem eine hier ebenfalls nicht gezeigte konventionelle pneumatische Bremseinrichtung zugeordnet.

Die den Rädern der Achsen 4,5,6 zugeordneten Bremseinrichtungen werden über eine Bremssteuereinrichtung 7 in Abhängigkeit von pneumatischen Steuersignalen gesteuert, die im Betrieb abhängig von der jeweiligen Fahrsituation vom Führer des Sattelzugs S durch Betätigung der am Zugfahrzeug 1 vorgesehenen Bremseinrichtung ausgelöst werden. Die Bremssteuereinrichtung 7 erfasst dazu mittels Sensoren, die an den Achsen 4,5,6 sowie an den den Achsen 4,5,6 jeweils zugeordneten Luftfederungen und Bremseinrichtungen vorgesehen sind, als für den Bremsbetrieb wesentliche Betriebsparameter beispielsweise die jeweils auf den Achsen lastende Last, die jeweilige Laufleistung, die jeweils zurückgelegte Wegstrecke, die aktuelle Geschwindigkeit, den jeweiligen Fehlerzustand der betreffenden Funktionselemente etc. Eine entsprechende Bremssteuereinrichtung ist beispielsweise in der Broschüre "Trailer EBS C/D Systembeschreibung", 2. Ausgabe 2010, WABCO Vehicle Control Systems, beschrieben.

An seiner Oberseite trägt das Chassis 3 einen ebenfalls konventionell ausgebildeten quaderförmigen Aufbau 8, der aus einem auf dem Chassis 3 aufliegenden Bodenelement 9, in das das Bremssteuerelement 7 eingelassen ist, zwei sich in Längsrichtung L erstreckenden Längsseitenwänden 10,11 einer der Zugmaschine 1 zugeordneten Stirnwand 12 und einer heckseitigen Rückwand 13 sowie einem Dachelement 14 gebildet ist, das von den Längsseitenwänden 10,11 der Stirnwand 12 und der Rückwand 13 getragen ist. An der Rückwand 13 ist eine zweiflügelige Tür 15 vorgesehen, über die die Beladung des von dem Aufbau 8 umschlossenen Laderaums 16 erfolgt. Ein Beispiel für einen Aufbau 8 dieser Art ist beispielsweise in der EP 2 116 461 B1 beschrieben. Im Betrieb nimmt der Laderaum 16 das zu transportierende Transportgut auf.

An der der Zugmaschine 1 zugeordneten Vorderseite der Stirnwand 12 des Aufbaus 8 ist eine Kältemaschine 17 befestigt, die im Kreislauf Luft aus dem Laderaum 16 ansaugt, abkühlt und als gekühlten Luftstrom mittels eines Ventilators über eine in der Stirnwand 12 vorgesehene Einlassöffnung in den Laderaum 16 bläst. Die Kältemaschine 17 wird dabei von einem Verbrennungsmotor angetrieben, der aus einem Tank 18 gespeist wird, der ebenfalls am Chassis 3 befestigt ist. Ein Beispiel für den Aufbau und die Funktion der Kältemaschine 17 ist in der DE 10 2010 022 993 A1 beschrieben.

Die Funktion der Kältemaschine 17 wird mittels einer in der Kältemaschine 17 vorgesehenen Steuereinrichtung 19 gesteuert, die mit einer Datenübergabeschnittstelle 20 versehen ist.

Neben der Bremssteuereinrichtung 7 ist an dem Sattelauflieger 2 eine ebenfalls in das Bodenelement 9 eingelassene Datenverarbeitungseinrichtung 21 vorgesehen, die über eine satellitengestützte Funkverbindung F mit einer zentralen Datenerfassungs- und Steuereinrichtung 22 verbunden ist, die beispielsweise in einer Verwaltungszentrale Z des Spediteurs steht, der den Sattelzug S betreibt.

Die Datenverarbeitungseinrichtung 21 ist über eine Datenleitung mit der Bremssteuereinrichtung 7 verkoppelt, über die die Bremssteuereinrichtung 7 alle von ihr erfassten Betriebsparameter an die Datenverarbeitungseinrichtung 21 liefert.

Des Weiteren erhält die Datenverarbeitungseinrichtung 21 von einer Messeinheit 23 Informationen über den Temperaturverlauf und den Feuchtegehalt der im Laderaum 16 enthaltenen Atmosphäre. Hierzu sind an die Messeinheit 23 vier regelmäßig verteilt im Laderaum 16 angeordnete Temperaturmesssensoren 24,25,26,27 vorgesehen, die die in der jeweils zugeordneten Zone des Laderaums 16 herrschenden Temperaturen erfassen. Die Luftfeuchtigkeit im Laderaum 16 wird gleichzeitig durch einen ebenfalls im Laderaum 16 befestigten Feuchtemesssensor 28 gemessen, der seine Messergebnisse ebenfalls an die Messeinheit 23 liefert.

Die Datenverarbeitungseinrichtung 21 verarbeitet die von ihr erhaltenen und erfassten Messergebnisse und Daten nach Maßgabe einer entsprechenden Programmierung und legt sie als aufbereitete Datensätze in einem Datenspeicher der Datenverarbeitungseinrichtung 21 ab. Zusätzlich sendet die Datenverarbeitungseinrichtung 21 in regelmäßigen Zeitabständen die von ihr aufbereiteten Datensätze an die zentrale Datenerfassungs- und Steuereinrichtung 22. Wird dort festgestellt, dass Steuereingriffe in bestimmte Funktionsgruppen des Sattelaufliegers 2 erforderlich sind oder Informationen an den Fahrzeugführer gesendet werden müssen, so können entsprechende Steuersignale von der zentralen Datenerfassungs- und Steuereinrichtung 22 an die am Sattelauflieger 2 vorgesehene Datenverarbeitungseinrichtung 21 gesendet werden.

Über eine an der Außenseite der Stirnwand 12 des Aufbaus 8 angeordnete Schnittstelle 29 können die im Datenspeicher der Datenverarbeitungseinrichtung 21 abgelegten und die bei ihr jeweils aktuell eintreffenden Daten ausgelesen werden.

Im Betrieb ist die Datenübertragungsschnittstelle 20 der Steuereinrichtung 19 der Kältemaschine 17 mittels einer lösbaren Steckverbindung an die Schnittstelle 29 angeschlossen. Die Steuereinrichtung 19 erhält über die so gebildete Datenverbindung 30 alle Informationen, die in der Datenverarbeitungseinrichtung 21 über den Betriebszustand des Sattelaufliegers 2 vorhanden sind.

Ergeben diese Informationen beispielsweise, dass die Temperatur im Laderaum zu ungleichmäßig verteilt ist, schaltet die Steuereinrichtung 19 einen Ventilator der Kältemaschine 17 ein oder erhöht dessen Drehzahl, um die Luftumwälzung im Laderaum 16 zu verstärken. Zeigt sich dagegen, dass die Temperatur im Laderaum 16 von einer Sollvorgabe abweicht, verändert die Steuereinrichtung 19 die Kühlleistung der Kältemaschine 17 entsprechend. Ergeben die von der Datenverarbeitungseinrichtung 21 an die Steuereinrichtung 19 gelieferten Daten dagegen, dass der Sattelzug S sich beispielsweise in einem Wohngebiet befindet, so kann die Leistung der Kältemaschine 17 zeitweilig gedrosselt werden, um die Lärmemissionen zu minimieren. Zeigen die von der Datenverarbeitungseinrichtung 21 gelieferten Daten an, dass der Sattelzug nur mit geringer Ladung gefahren wird, so kann die Steuereinrichtung 19 daraufhin ebenfalls selbsttätig die Leistung der Kältemaschine 17 entsprechend anpassen.

Umgekehrt kann aber auch die Steuereinrichtung 19 über die Datenverbindung 30 Informationen über den Betriebszustand der Kältemaschine 17 an die Datenverarbeitungseinrichtung 21 liefern, die diese dann wiederum an die zentrale Datenerfassungs- und Steuereinrichtung 22 sendet. Auf diese Weise kann dort der Betriebszustand der Kältemaschine 17 erfasst und überwacht werden. Beispielsweise kann auf diesem Wege der Fahrzeugführer über den im Tank 18 vorhandenen Treibstoffvorrat, erforderliche Wartungsarbeiten etc. informiert werden, ohne selbst entsprechende Kontrollen vornehmen zu müssen.

**BEZUGSZEICHEN**

| | |
|---|---|
| 1 | Zugmaschine |
| 2 | Sattelauflieger |
| 3 | Chassis |
| 4, 5, 6 | Achsen des Sattelaufliegers 2 |
| 7 | Bremssteuereinrichtung |
| 8 | Aufbau des Sattelaufliegers 2 |
| 9 | Bodenelement des Aufbaus 8 |
| 10,11 | Längsseitenwände des Aufbaus 8 |
| 12 | Stirnwand des Aufbaus 8 |
| 13 | Rückwand des Aufbaus 8 |
| 14 | Dachelement des Aufbaus 8 |
| 15 | Tür |
| 16 | vom Aufbau 8 umschlossener Laderaum |
| 17 | Kältemaschine |
| 18 | Tank zur Versorgung der Kältemaschine 17 |
| 19 | Steuereinrichtung der Kältemaschine 17 |
| 20 | Datenübergabeschnittstelle der Steuereinrichtung 19 |
| 21 | Datenverarbeitungseinrichtung |
| 22 | zentrale Datenerfassungs- und Steuereinrichtung |
| 23 | Messeinheit |
| 24-27 | Temperaturmesssensoren |
| 28 | Feuchtemesssensor |
| 29 | Schnittstelle |
| 30 | Datenverbindung |
| | |
| F | Funkverbindung |
| L | Längsrichtung des Sattelzugs S |
| S | Sattelzug |
| U | Umgebung |
| Z | Verwaltungszentrale |

## Patentansprüche

1. Nutzfahrzeug für den Transport von temperaturgeführtem Transportgut,
- mit einem Aufbau (8), der einen das Transportgut aufnehmenden Laderaum (16) umgibt,
- mit einer Kältemaschine (17), die temperierte Luft in den Laderaum (16) abgibt und eine Steuereinrichtung (19) umfasst, die die Kältemaschine (17) steuert, und
- mit einer zentralen Datenverarbeitungseinrichtung (21), die Betriebsparameter des Nutzfahrzeugs (2) erfasst, verarbeitet oder abspeichert,
**dadurch gekennzeichnet, dass**
die Steuereinrichtung (19) der Kältemaschine (17) mit der Datenverarbeitungseinrichtung (21) des Nutzfahrzeugs (2) über eine Datenverbindung (30) zur Übertragung von Daten verbunden ist, und **dass** die Steuereinrichtung (19) die Kältemaschine (17) in Abhängigkeit von Daten steuert, die die Datenverarbeitungseinrichtung (21) der Steuereinrichtung (19) über die Datenverbindung (30) zur Verfügung stellt.

2. Nutzfahrzeug nach Anspruch 1, **dadurch gekennzeichnet, dass** die Datenverarbeitungseinrichtung (21) eine Rechnereinheit, eine Speichereinheit und eine Schnittstelle (29) umfasst, an der die von der Datenverarbeitungseinrichtung (21) zur Verfügung gestellten Daten auslesbar sind.

3. Nutzfahrzeug nach Anspruch 2, **dadurch gekennzeichnet, dass** die Steuereinrichtung der Kältemaschine (17) zur Herstellung der Datenverbindung (30) an die Schnittstelle (29) der Datenverarbeitungseinrichtung (21) anschließbar ist.

4. Nutzfahrzeug nach einem der Ansprüche 1 oder 2, **dadurch gekennzeichnet, dass** die Datenverarbeitungseinrichtung (21) die von ihr jeweils zur Verfügung gestellten Daten drahtlos an die Steuereinrichtung (19) der Kältemaschine (17) überträgt.

5. Verfahren zum Betrieb einer an einem Nutzfahrzeug für den Transport von temperaturgeführtem Transportgut vorgesehenen Kältemaschine (17), wobei das Nutzfahrzeug (2)
- einen Aufbau (8), der einen das Transportgut aufnehmenden Laderaum (16) umgibt,
- die Kältemaschine (17), die temperierte Luft in den Laderaum (16) abgibt und eine Steuereinrichtung (19) aufweist, die die Kältemaschine (17) steuert, und
- eine zentrale Datenverarbeitungseinrichtung (21) umfasst, die Betriebsparameter des Nutzfahrzeugs (2) erfasst, verarbeitet oder speichert,
**dadurch gekennzeichnet, dass**
die Kältemaschine (17) in Abhängigkeit von Daten gesteuert wird, die der Steuereinrichtung (19) der Kältemaschine (17) von der Datenverarbeitungseinrichtung (21) über eine Datenverbindung (30) zur Verfügung gestellt werden.

6. Verfahren nach Anspruch 5, **dadurch gekennzeichnet, dass** die Datenverarbeitungseinrichtung (21) die Daten über eine Schnittstelle (29) zur Verfügung stellt, an die die Steuereinrichtung (19) der Kältemaschine (17) ankoppelbar ist und über die die von der Datenverarbeitungseinrichtung (21) zur Verfügung gestellten Daten auslesbar sind.

7. Verfahren nach einem der Ansprüche 5 oder 6, **dadurch gekennzeichnet, dass** die Daten, die die Datenverarbeitungseinrichtung (21) der Steuereinrichtung (19) zur Verfügung stellt, von der Datenverarbeitungseinrichtung (21) auf Grundlage der Betriebsparameter ermittelt werden, die die Datenverarbeitungseinrichtung (21) erfasst.

8. Verfahren nach Anspruch 7, **dadurch gekennzeichnet, dass** die Betriebsparameter, auf deren Grundlage die Datenverarbeitungseinrichtung (21) die der Steuereinrichtung (19) der Kältemaschine (17) zur Verfügung gestellten Daten ermittelt, ein innerhalb des Laderaums (16) erfasster Temperaturmesswert, ein innerhalb des Laderaums (16) erfasster Feuchtemesswert, ein Füllstandsmesswert, der den Füllstand eines Vorrats für einen zum Betrieb der Kältemaschine (17) benötigten Treibstoff angibt, eine Information über die absolute oder auf den jeweiligen Einsatz bezogene Laufleistung des Nutzfahrzeugs (2), eine Information über die jeweils beim jeweils aktuellen Einsatz oder über alle Einsätze transportierte Last, eine Information über die jeweils aktuelle oder gemittelte Geschwindigkeit, mit der das Nutzfahrzeug (2) im Betrieb unterwegs ist, oder eine Information über einen Fehler an dem Nutzfahrzeug (2) ist.

9. Verfahren nach einem der voranstehenden Ansprüche, **dadurch gekennzeichnet, dass** die von der Datenverarbeitungseinrichtung (21) erfassten und zur Grundlage der der Steuereinrichtung (19) zur Verfügung gestellten Daten gemachten Betriebsparameter die Ergebnisse von Temperaturmessungen sind, die in mindestens zwei Zonen des Laderaums (16) erfasst werden.

10. Verfahren nach einem der Ansprüche 4 bis 9, **dadurch gekennzeichnet, dass** die von der Datenverarbeitungseinrichtung (21) der Steuereinrichtung (19) der Kältemaschine (17) zur Verfügung gestellten Daten von der Datenverarbeitungseinrichtung (21) in Abhängigkeit von mindestens zwei oder mehr unterschiedlichen Betriebsparametern ermittelt werden, die von der Datenverarbeitungseinrichtung (21) zur Verfügung gestellt werden.

11. Verfahren nach einem der voranstehenden Ansprüche, **dadurch gekennzeichnet, dass** das Nutzfahrzeug (2) mindestens eine weitere Temperiereinrichtung umfasst, **dass** die Kältemaschine (17) einer ersten Zone und die zusätzliche Temperiereinrichtung einer zweiten Zone des Laderaums (16) zugeordnet ist und **dass** die Kältemaschine und die jeweils zusätzliche Temperiereinrichtung in Abhängigkeit von den von der Datenverarbeitungseinrichtung (21) zur Verfügung gestellten Betriebsparameter gesteuert wird.

12. Verfahren nach einem der Ansprüche 5 bis 11, **dadurch gekennzeichnet, dass** von der Steuereinrichtung (19) Daten an die Datenverarbeitungseinrichtung (21) übertragen werden, die von der Datenverarbeitungseinrichtung (21) erfasst, verarbeitet oder abgespeichert werden.

13. Verfahren nach einem der Ansprüche 5 bis 12, **dadurch gekennzeichnet, dass** die von der Datenverarbeitungseinrichtung (21) erfassten Betriebsparameter oder Daten per Datenfernübertragung drahtlos an eine Steuerzentrale (22) übermittelt werden.

14. Verfahren nach Anspruch 13, **dadurch gekennzeichnet, dass** die Steuerzentrale (22) Steuerbefehle an die Datenverarbeitungseinrichtung (21) sendet, auf deren Grundlage die Datenverarbeitungseinrichtung (21) die der Steuereinrichtung der Kältemaschine (17) zur Verfügung gestellten Daten von der Datenverarbeitungseinrichtung (21) ermittelt werden.
